# EUROPEAN PATENT SPECIFICATION

(11) **EP 3 232 185 B1**
(45) Date of publication and mention of the grant of the patent: **03.06.2020**
(21) Application number: 17000649.8
(22) Date of filing: 13.04.2017
(51) Int. Cl.: G01N 21/90, G01N 21/95

(54) **APPARATUS FOR DETECTING MICRO-CRACKS IN LIDS**
VORRICHTUNG ZUM FESTSTELLEN VON MIKRORISSEN IN DECKELN.
DISPOSITIF POUR DÉTECTER DES MICROFISSURES DANS DES COUVERCLES.

(30) Priority: 15.04.2016 IT UA20162635
(43) Date of publication of application: 18.10.2017
(73) Proprietor: Softau Sas di D'Antonio Ciro, 80056 Ercolano (NA) (IT)
(72) Inventor: D'Antonio, Ciro, 80056 Ercolano (Na) (IT)
(74) Representative: Maiello, Helenio Francesco

(56) References cited:
- EP-A1- 2 853 887
- EP-A2- 2 453 225
- DE-A1-102013 102 653
- DE-C1- 19 852 369
- US-A- 3 991 882
- US-A- 4 086 497
- US-A- 5 563 700
- US-A1- 2008 259 329
- US-A1- 2009 107 896

## Description

### Technical Field

The present invention fond its application in the technical field of packaging systems and has as object an apparatus for detecting micro-cracks in lids, in particular lids for containers of food or perishable products.

### State of the art

As known, in order to ensure optimum storage of foodstuffs or other perishable products, either liquid or solid, inside packs such as pans, cans or the like, it is necessary to guarantee the perfect sealing closure of the container.

To this end, it is not only necessary that the closing lid of the container is coupled to the container itself to ensure a perfect sealing, but all parts of the container, including the lid, must be perfectly intact and without cracks, also of the order of microns. There are several devices or "testers" on the market for detecting cracks in lids for containers that differ with each other for the different technology used.

In general, stand-alone meters, i.e. applied offline, are machines having a considerable weight and encumbrance for the presence of air/vacuum pumps and complex mechanical components undergoing wear, so requiring continuous maintenance. Moreover, they cannot be easily installed on existing lines due to their considerable size.

The tester for *"easy open"* lids that use pressure gas control systems are very effective tools for detecting leakage through micro-cracks but require time or seconds for running a single test.

Consequently, in a quick flow of lids they can test small percentages of lids so carrying out only a statistical control, being adapted for laboratory uses.

A further type of online tester, i.e. installed directly on the production line, provide the application directly on the conversion presses.

These systems, which are particularly popular for *easy open* lids, are a simplified solution as they use the feed advancement organs for the lids, the break of the molding step and the synchronization of the press itself, and are able to test 100% of the production even on fast presses up to 500 CPM.

However, such equipment cannot operate in applications with a press-independent continuous flow of lids.

They also generate unwanted "false positives", i.e. ejection of intact lids, due to the influence of electrical disturbances and of the strong mechanical stress generated by the press which they are integral to.

For these reasons, these apparatuses show low sensitivity with a risk of not detecting minor cracks.

Another category of testers consists of vision systems or *"Smart Cameras"* that process the scanned image to detect the defects in the lid. Some of these systems are disclosed in US2009/107896 and DE19852369.

These testers arc effective in detecting surface defects of the lid, such as stain or macroscopic alteration in the shape, but are not suitable for detecting minor lacks especially if they are hidden under the ring or in the rivet.

An example of such a solution is disclosed in EP2453225 which describes an apparatus for detecting cracks in caps or other closures for containers which includes all the features of the preamble of claim 1.

A further system is disclosed in EP2853887, wherein a first and a second IR camera are used to detect defect on the lids.

An additional drawback of such solutions is also the absence of means for preventive control to prevent deformed covers from being placed in the inspection area or not in the right position.

### Scope of the invention

The object of the present invention is to overcome the above mentioned drawbacks by providing an apparatus for detecting micro-cracks in lids which is particularly efficient, fast and relatively inexpensive.

A particular object is to provide an apparatus for detecting micro-cracks in lids that can be applied directly on the production line and that allows to detect the cracks, included microcracks, in a noticeably fast way and with a continuous flow of lids independent from the press or other lids forming device to perform a "flying" test, i.e. without stopping the flow of lids.

Another object is to provide an apparatus for detecting micro-cracks in lids that exhibit high sensitivity to detect even minor crack, avoiding false positives.

Yet another object is to provide an apparatus for detecting micro-cracks in lids that is particularly compact and relatively light to be suitable for installation also on existing lines.

Yet another object is to provide an apparatus for detecting micro-cracks in lids that carries out a dimensional pre-checking on the lids and proceeds to a preventive discarding of non conforming lids or lids not in the right position.

Such objects, as well as others that will become more apparent hereinafter, are achieved by an apparatus for detecting micro-cracks in lids which, according to claim 1, comprises a surface for supporting and moving one or more lids in a predetermined material having means for forwarding the lids, a control station associated with said support and moving surface and having control means for detecting micro-fractures and micro-cracks in the lids.

The control means comprise an infrared device having an IR emitter and an IR receiver reciprocally faced and spaced to define a tunnel for the passage of the lids to be controlled, said TR emitter being adapted to send, upon transit of a lid in said passage, an IR radiation beam, said receiver being adapted to receive possible radiation crossing the lid directly and/or by reflection and to generate an error signal.

The use of IR rays allows for high sensitivity to detect fractures with a diameter of several micron size across the entire cover panel and also to detect some defects on the edge.

The absence of cumbersome components such as vacuum pumps, compressors and complex mechanical conveying systems of the lid during the test will allow to obtain a particularly compact and lightweight apparatus and thus adapted to be easily integrated into existing lines.

Suitably, said infrared device may be adapted to carry out a control test by sending said IR radiation beam having a duration less than 5ms and preferably close to 2ms. This will greatly increase the productivity of the device, which will be able to perform flight tests on all lids, up to a cadence of about 800 lids per minute on a single line without interruption of the flow of lids.

Advantageously, there will also be a pre-control station located upstream of said control station and capable of carrying out a dimensional analysis of the lids so as to discard any integrity but deformed lids, and therefore not suitable.

Advantageous embodiments of the invention are obtained according to the dependent claims.

### Brief disclosure of the invention

Further features and advantages of the invention will become more apparent in the light of the detailed description of a preferred but not exclusive embodiment of an apparatus for detecting micro-cracks in lids according to the invention, illustrated by way of non-limiting example with the aid of the joined drawings, wherein:
**FIG. 1** is a side view of the apparatus without some components;
**FIG. 2** is a perspective view of a detail of the apparatus showing the IR device;
**FIG. 3** is an exploded view of the IR device of Fig. 2;
**FIG. 4** is a prospective view of the pre-control station;
**FIG. 5** is a front view of the pre-control station of Fig. 4;
**FIG. 6** is a side view of a detail of the apparatus showing the passage of the lid from the pre-control station to the control station;
**FIG. 7** is a top view of further a detail of the apparatus;
**FIG. 8** is a front view of the apparatus.

### Best mode of carrying out the invention

With reference to the accompanying drawings, there is shown an apparatus for detecting micro-cracks in lids used to detect micro-cracks in *"easy open"* lids, i.e. circular metal lids provided with a tab to facilitate removal of the lid from the container.

However, the apparatus may also be used, by simple dimensional changes within the compass of the expert of the art, with any type of lid having a size and/or shape different than the shown lid.

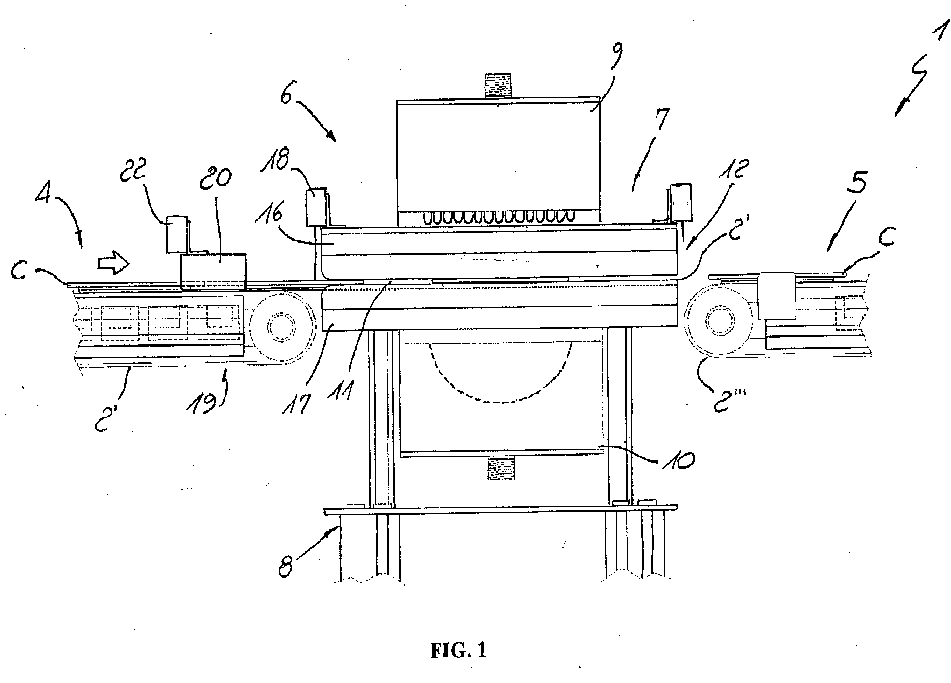

From **Fig. 1** it is noted that the apparatus, generally indicated with **1,** essentially comprises a support and moving surface **2** for the lids **C** having forwarding means **3** of the lids **C** from a loading station **4** to a discharging station **5.**

A control station **6** is interposed between the loading stations **4** and the discharging station **5** and is associated with the support and moving surface **2** and has control means **7** for detecting microfractures and microcracks in the lids **C,** particularly in a lid **C** at a time.

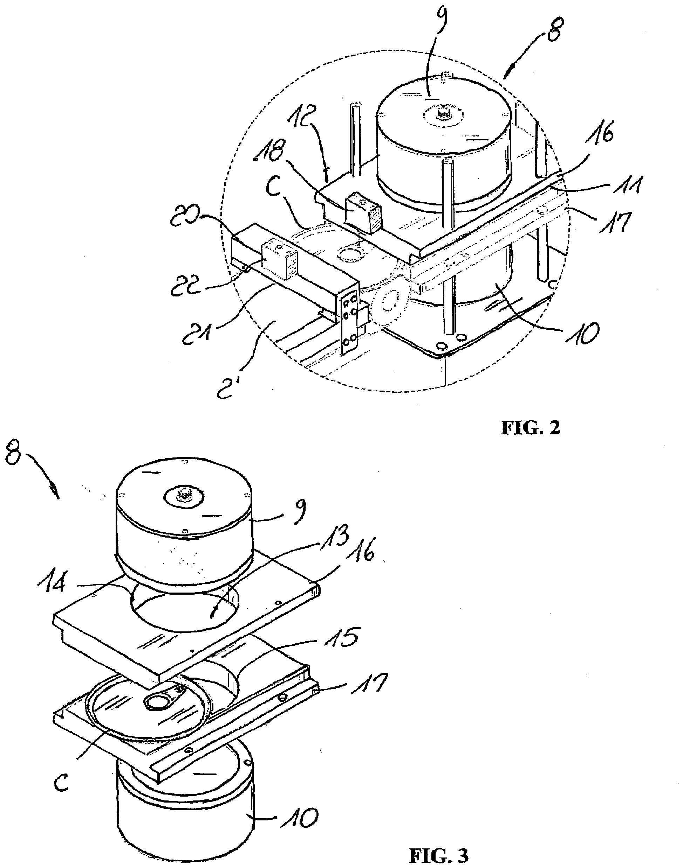

The control means **7** comprise an infrared device **8,** shown in greater detail in **Fig. 2****,** having an IR emitter **9** and a IR receiver **10** mutually facing and spaced to define a tunnel 11 for the passage of the lids, inside which the integrity check test will be carried out. Preferably, the IR emitter **9** will be mounted above the IR receiver **10.**

The IR emitter **9** will be configured to send an IR radiation beam towards the IR receiver **10** upon the passage of a lid **C** inside the tunnel **11.**

The latter is in turn adapted to receive possible radiation crossing the lid **C** directly and/or by reflection and to generate an error signal that may cause interruption of the forwarding means **3** or the expulsion of the defective lid by means of suitable means, neither shown nor described as not being part of the present invention, without the need to stop the flow.

A logical control unit, in particular a microcontroller, may also be provided, which can be programmed to stop the apparatus **1** after a predetermined number of errors.

As can be seen more clearly from **Fig. 3****,** the IR device **8** comprises a shield plate **12** having a longitudinal slot defining the tunnel **11** and an irradiation channel **13** orthogonal to the tunnel **11** and coaxial with both the IR emitter **9** and with the IR receiver **10.**

The irradiation channel **13** will have opposed openings **14, 15** respectively facing the IR emitter **9** and the IR receiver **10** for the passage of the IR radiation beam toward the tunnel **11**.

In particular, the plate **12** is formed by a pair of shaped half-plates **16, 17** specularly mounted, each of which is perforated in the central zone at the test area facing the IR emitter **9** and in which the IR beam will pass.

The irradiation channel **13** will be cylindrical with a diameter substantially corresponding to the diameter of the lid **C** to be controlled.

According to a preferred embodiment of the invention, half-plates **16, 17** are made in black Nylon 66, for example by milling a single block, so that it is wear-resistant and prevent scratches of the lids **C** during surface sliding.

The use of black color and the presence of a suitable thickness will allow for a total IR shielding in the perimeter area of the lid **C** during the run of the test.

Preferably, the IR emitter **9** will be a dual emission LED emitter consisting of a high power optical Led array with infrared emission having a 850nm peak wavelength. The choice of infrared light is determined by the use of photodiodes, i.e. optoelectronic components having maximum sensitivity for electromagnetic radiation of wavelengths between 800nm and 900nm, corresponding to a portion of the infrared light band. The IR LEDs will be excited with high current pulses through power Mosfet transistors.

According to a preferred but not exclusive configuration, the IR detector **10** will be of the dual-channel photodiode type with a parabolic reflector having high reflectance, obtained by metallizing the surface thereof with aluminum and high vacuum evaporated quartz.

The TR emitter **9** will have two emission levels with a first low intensity level operated by the descent wavefront of a first photocell **18,** for example by dipping, generated by the entrance of a lid **C** in the test tunnel **11.**

In this way, the IR receiver **10** will detect the centering of the lid **C** to generate a synchronous signal that will activate a second high intensity level in the IR emitter **9** useful for testing.

The IR receiver **10** will also be designed to converge the infrared rays onto a photodiode prism positioned in its focus. In the electronic circuit, high sensitivity photodiode and high gain and high speed operational amplifiers are used as detection elements. The functions described above may be realized by two independent amplification channels and with programmable sensitivity.

The infrared device **8** is designed to perform a test with a total duration of less than 5ms and preferably close to 2ms, so that the "flying" test is carried out during the passage of the lid **C** without the need for a stop.

The test execution will occur when lid **C** is perfectly aligned with the IR emitter **9** and the IR receiver **10.**

This position will not be detected by a physical sensor but will be determined according to speed with an algorithm implemented in the logic control unit.

As seen from **Fig. 1****,** upstream of the control station **6,** with respect to the forwarding flow of the lids **C,** a pre-control station **19** adapted for carrying out a dimensional analysis of the lid C is provided.

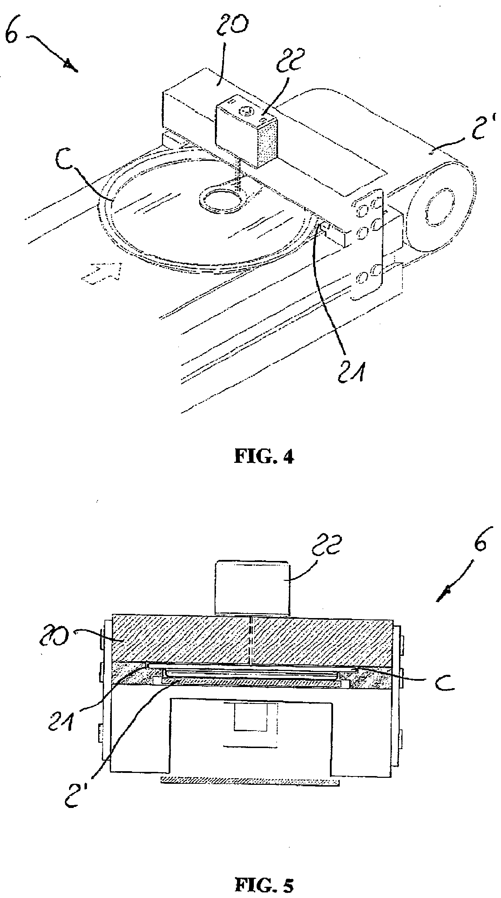

As more clearly visible from **Fig. 4****,** the pre-control station **19** comprises a bridge **20** positioned on the supporting and moving surface **2,** and adapted to defines therewith a passage **21** having dimensions substantially corresponding to those of the lids **C** to freely pass the regular lids and block the capped or deformed lids avoiding they reach the control station **6.**

Preferably but not exclusively, the bridge **20** may be made by milling a wear-resistant nylon 66 block preventing scratches of the lids during the sliding of the surfaces.

Its object will be to verify the correct orientation of the lid, as it is internally shaped, with a given tolerance, according to the maximum orthogonal section of the specific lid to be tested, so that the lids can be freely passed, instead blocking those turned over or deformed before they are introduced into the IR control station **6.**

At the inlet section of the bridge **20,** a second photocell **22** will be arranged, for example also in this case a casing photocell, which will generate a prolonged pulse proportional to the transit time of the lid **C.**

The logic control unit, housed in a control box, not shown, will be programmed to generate an immediate stop command if that time is greater than a predetermined value, generating an alarm message that may be displayed on an operator panel or communicated by visual and/or sound signals or according to other methodologies. The pre-control station **19** will also be adapted to orient the lids **C** in a predetermined direction and maintain this orientation constant during the passage from the bridge **20** to the test tunnel **11.**

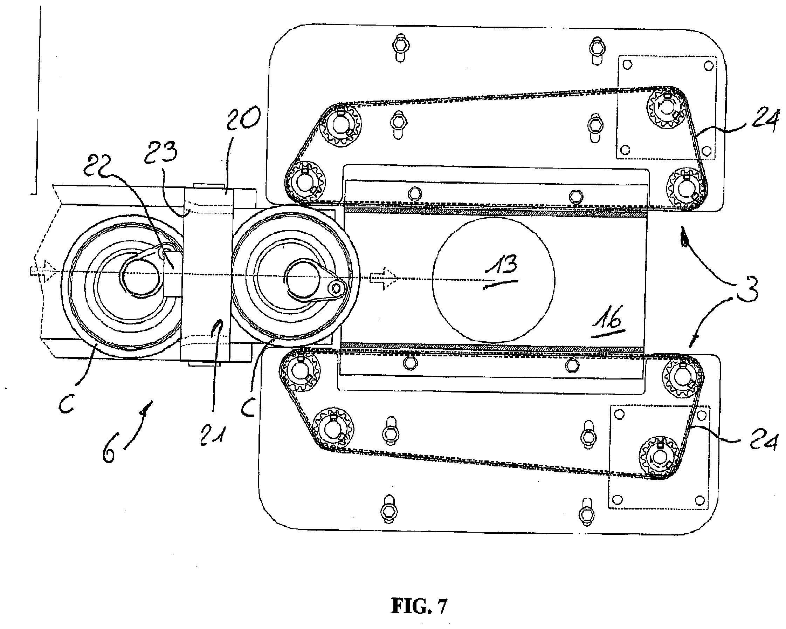

In particular, as will be more clearly seen from **Fig. 7****,** the bridge **20** will be internally shaped with an inlet section **23** tapered toward the forwarding direction of the lids **C** so as to recover any misalignments in the horizontal plane with respect to a central axis of the Support and moving surface **2.**

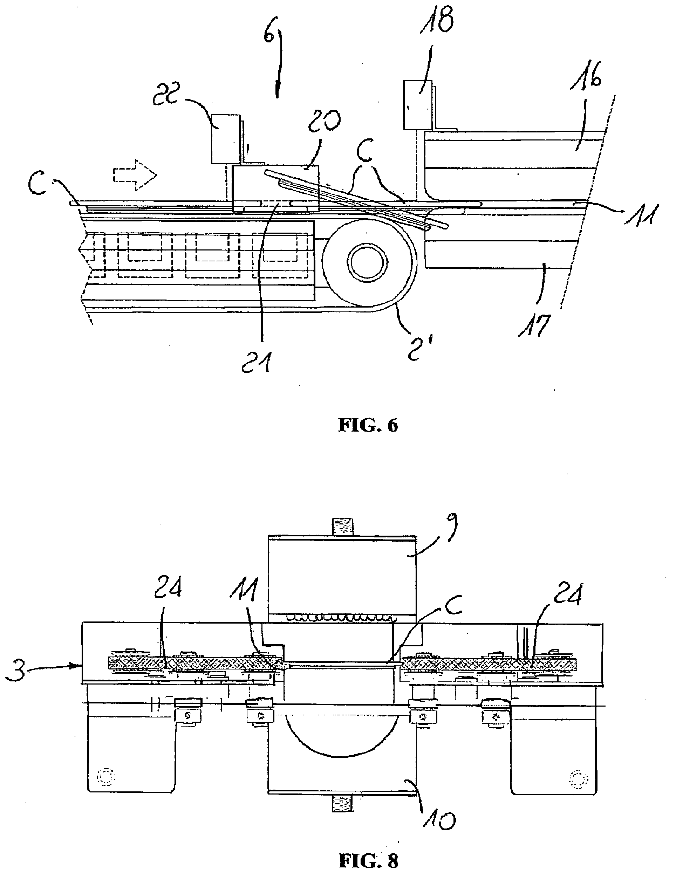

As shown in **Fig. 6****,** the bridge **20** will also be designed to keep the **lids** C horizontally aligned during the passage in the control station **6** to facilitate a precise introduction into the horizontal input slot of the test tunnel **11.**

More specifically, the axial distance between the output section of the bridge **20** and the inlet section of the test tunnel **11** will be less than the diameter of the lid **C,** so that the latter enters the tunnel **11** before being completely discharged from the bridge **20.** **Figs. 7** and **8** show in more detail the forwarding means **3,** which will comprise a belt support and moving surface **2** moved by motorized rollers.

The surface **2** will preferably be divided into several separate sections, with a first section **2'** arranged at the loading station and pre-control station **19,** a second section **2"** at the control station **6** and a third section **2'"** at the discharging station **5.**

A pair of lateral drive slings belt **24,** of the closed loop type, is also arranged at the control station **6,** which will be synchronously moved so as to drag the lids **C** with a predominantly straight motion. The moving of the belts **24** may be achieved by means of respective brushless motors.

The belts **24** will preferably be made of polymeric material with anti-wear rubber coating, for example polyurethane coated with a 40° shore-A anti-wear rubber layer to obtain a gripping on the edge of the lid **C** without damaging it.

In the illustrated configuration, the support and moving surface **2** is horizontal and the flow of the lids will be produced by the limited friction with the surface **2** itself as well as by the belts **24.**

This configuration allows for a flow of lids up to 800 pieces per minute.

According to a not shown variant, the moving surface **2** may also be inclined, with an inclination angle selected also as function of the number of pieces per minute to be controlled.

In this way the forwarding of the lids **C** within the control station **6** and the test tunnel **11** may be obtained due to the gravity and without lateral belts **24** or equivalent forwarding means **3.**

The use of half-plates **16, 17** in nylon or other low friction material will still provide a high flow even in the presence of a strong inclination of surface **2,** with flow values up to 400 pieces per minute.

The solution with inclined surface **2** and gravity forwarding may advantageously be implemented also in control apparatus of the type described above but wherein the infrared device **8** is replaced by control means operating according to different technologies, also according to the state of the art above-described.

Such a solution would always allow rapid flow of lids for the implementation of flying tests in the presence of appropriate technologies.

From above it is apparent that the apparatus according to the invention achieves the predetermined aims and in particular it allows to detect microscopic lesion on all lids in a quick and precise manner and without having to stop the implant.

The apparatus according to the invention is susceptible of numerous modifications and variants, all of which are within the inventive concept expressed in the appended claims. All details may be replaced by other technically equivalent elements, and the materials and tools may be different according to the needs without departing from the scope of the present invention as defined in the appended claims.

## Claims

1. An apparatus for detecting micro-cracks in lids, comprising:
- a surface for supporting and moving (**2**) of one or more lids (**C**) having means for forwarding (**3**) the lids (**C**);
- a control station (**6**) associated with said supporting and moving surface (**2**) and having control means (**7**) adapted to detect micro-fractures and micro-cracks in the lids (**C**);
wherein said control means (**7**) comprise an IR device (**8**) having an IR emitter (**9**) and an IR receiver (**10**) mutually facing and spaced apart to define a tunnel (**11**) for the passage of the lids (**C**) to be controlled, said IR emitter (**9**) being adapted to send, upon the transit of a lid (**C**) in said tunnel (**11**), a IR radiation beam, said IR receiver (**10**) being adapted to receive radiation possibly passing through the lid (**C**) in a direct way and/or by reflection and to generate an error signal.
**characterized by** comprising a pre-control station (**19**) arranged upstream of said control station (**6**) and adapted to carry out a dimensional analysis of the lids, said pre-control station (**19**) comprising a bridge (**20**) placed on said supporting and moving surface (**2**) to define therewith a passage section whose dimensions substantially correspond to those of the lids (**C**) to make the regular lids freely pass and block upside down or deformed lids avoiding these latter come into said control station (**6**).

2. Apparatus as claimed in claim 1, **characterized in that** said pre-control station (**19**) is adapted to orient the lids (**C**) according to a predetermined direction and maintain said orientation during the passage from said bridge (**20**) toward said tunnel (**11**).

3. Apparatus as claimed in any preceding claim, **characterized in that** said IR emitter (**9**) is adapted to generate a IR radiation beam having a wavelength between 800nm and 900nm.

4. Apparatus as claimed in claim 3, **characterized in that** said control station (**6**) comprises a shielding plate (**12**) having a longitudinal slot defining said tunnel (**11**) for the passage of the lids (**C**).

5. Apparatus as claimed in claim 4, **characterized in that** said shielding plate (**12**) comprises an irradiation conduit (**13**) transverse to said tunnel (**11**) and coaxial with said IR emitter (**9**) and with said IR receiver (**11**), said irradiation conduit (**13**) having axial openings (**14, 15**) mutually opposite and respectively facing to said IR emitter (**9**) and to said IR receiver (**10**) for the passage of the IR radiation beam in said tunnel (**11**).

6. Apparatus as claimed in claim 5, **characterized in that** said irradiation conduit (**13**) has a diameter substantially corresponding to the diameter of the lids (**C**) to be controlled.

7. Apparatus as claimed in any preceding claim, **characterized in that** said infrared device (**8**) is adapted to carry out a control test by sending said IR radiation beam having a duration less than 5ms and preferably close to 2ms.

8. Apparatus as claimed in any preceding claim, **characterized in that** said pre-control station (**19**) comprises a photocell (**22**) adapted to generate a pulse of duration proportional to the time of transit of the lid (**C**) in said bridge (**20**), said photocell (**22**) being operatively connected to a microcontroller unit adapted to generate an immediate stop command if said transit time is greater than a predetermined value.

9. Apparatus as claimed in any preceding claim, **characterized in that** said forwarding means (**3**) comprise, in said control station (**6**), a pair of drive belts (**24**) rotating synchronously and made of a polymeric material with an anti-wear rubber coating.

## Patentansprüche

1. Vorrichtung zum Feststellen von mikrorissen in Deckeln, umfassend:
- eine Oberfläche (**2**) zum Tragen und Bewegen eines oder mehrerer Deckel (**C**) mit Weiterleitungsmittel (**3**) der Deckel (**C**);
- eine Kontrollstation (**6**), die der Stütz- und Bewegungsfläche (**2**) zugeordnet ist und Kontrollmittel (**7**) aufweist, die zum Erfassen von Mikro-Frakturen und Mikrorissen in den Deckeln (**C**) ausgelegt sind;
wobei die Kontrollmittel (**7**) eine IR-Vorrichtung (**8**) mit einem IR-Emitter (**9**) und einem IR-Empfänger (**10**) umfassen, die einander zugewandt und voneinander beabstandet sind, um einen Tunnel (**11**) für den Durchgang der Deckel (**C**) zu definieren gesteuert werden, wobei der IR-Emitter (**9**) angepasst ist, um beim Durchgang eines Deckels (**C**) in dem Tunnel (**11**) einen IR-Strahlungsstrahl zu senden, wobei der IR-Empfänger (**10**) angepasst ist, um Strahlung zu empfangen, die möglicherweise durch die hindurchgeht Deckel (**C**) direkt und/oder durch Reflexion und zur Erzeugung eines Fehlersignals.
**gekennzeichnet durch** eine Vorsteuerstation (**19**), die stromaufwärts von der Kontrollstation (**6**) angeordnet und angepasst ist, um eine Dimensionsanalyse der Deckel durchzuführen, wobei die Vorsteuerstation (**19**) eine Brücke (**20**) umfasst, die auf dem Träger angeordnet ist und eine bewegliche Oberfläche (**2**), um damit einen Durchgangsabschnitt zu definieren, dessen Abmessungen im Wesentlichen denen der Deckel (**C**) entsprechen, damit die regulären Deckel frei passieren und verkehrte oder verformte Deckel blockieren, um zu vermeiden, dass diese in die Kontrollstation (**6**) gelangen.

2. Vorrichtung nach Anspruch 1, **dadurch gekennzeichnet, dass** die Vorsteuerstation (**19**) dazu ausgelegt ist, die Deckel (**C**) gemäß einer vorbestimmten Richtung auszurichten und die Ausrichtung während des Durchgangs von der Brücke (**20**) in Richtung des Tunnels (**11**) beizubehalten.

3. Vorrichtung nach einem der vorhergehenden Ansprüche, die **dadurch gekennzeichnet ist, dass** der IR-Emitter (**9**) zur Erzeugung eines IR-Strahlungsstrahls mit einer Wellenlänge zwischen 800 nm und 900 nm angepasst ist.

4. Vorrichtung nach Anspruch 3, **dadurch gekennzeichnet, dass** die Kontrollstation (**6**) eine Abschirmplatte (**12**) mit einem Längsschlitz aufweist, der den Tunnel (**11**) für den Durchgang der Deckel (**C**) definiert.

5. Vorrichtung nach Anspruch 4, **dadurch gekennzeichnet, dass** die Abschirmplatte (**12**) eine Bestrahlungsleitung (**13**) quer zum Tunnel (**11**) und koaxial mit dem IR-Emitter (**9**) und mit dem IR-Empfänger (**11**) umfasst, wobei die Bestrahlungsleitung (**13**) axiale Öffnungen (**14, 15**) aufweist, die einander gegenüberliegen und jeweils dem IR-Emitter (**9**) und dem IR-Empfänger (**10**) für den Durchgang des IR-Strahlungsstrahls in dem Tunnel (**11**) zugewandt sind.

6. Vorrichtung nach Anspruch 5, **dadurch gekennzeichnet, dass** die Bestrahlungsleitung (**13**) einen Durchmesser aufweist, der im Wesentlichen dem Durchmesser der zu steuernden Deckel (**C**) entspricht.

7. Vorrichtung nach einem der vorhergehenden Ansprüche, die **dadurch gekennzeichnet ist, dass** die IR-Vorrichtung (**8**) zur Durchführung eines Kontrolltests durch Senden des IR-Strahlungsstrahls mit einer Dauer von weniger als 5 ms und vorzugsweise nahe 2 ms geeignet ist.

8. Vorrichtung nach einem der vorhergehenden Ansprüche, **gekennzeichnet dadurch, dass** die Vorsteuerstation (**19**) eine Fotozelle (**22**) umfasst, die dazu ausgelegt ist, einen Impuls von Dauer zu erzeugen, der proportional zur Laufzeit des Deckels (**C**) in der Brücke ist (**20**) ist die Fotozelle (**22**) betriebsmäßig mit einer Mikrocontrollereinheit verbunden, die dazu ausgelegt ist, einen Sofortstoppbefehl zu erzeugen, wenn die Laufzeit größer als ein vorbestimmter Wert ist.

9. Vorrichtung nach einem der vorhergehenden Ansprüche, **gekennzeichnet dadurch, dass** die Weiterleitungsmittel (**3**) in der Kontrollstation (**6**) ein Paar Antriebsriemen (**24**) umfassen, die sich synchron drehen und aus einem Polymermaterial mit einem Verschleißschutz bestehen Gummierung.

## Revendications

1. Dispositif pour détecter des microfissures dans des couvercles, comprenant :
- une surface de support et de déplacement (**2**) d'un ou plusieurs couvercles (**C**) comportant des moyens d'alimentation (**3**) les couvercles (**C**);
- un poste de commande (**6**) associé à ladite surface de support et de déplacement (**2**) et comportant des moyens de commande (**7**) adaptés pour détecter des micro-fractures et micro-fissures dans les couvercles (**C**);
dans lequel lesdits moyens de commande (**7**) comprennent un dispositif IR (**8**) ayant un émetteur IR (**9**) et un récepteur IR (**10**) se faisant mutuellement face et espacés pour définir un tunnel (**11**) pour le passage des couvercles (**C**) à être contrôler, ledit émetteur IR (**9**) étant adapté pour envoyer, lors du passage d'un couvercle (**C**) dans ledit tunnel (**11**), un faisceau de rayonnement IR, ledit récepteur IR (**10**) étant adapté pour recevoir un rayonnement passant éventuellement par le couvercle (**C**) de manière directe et/ou par réflexion et pour générer un signal d'erreur.
**caractérisé en ce qu'**il comprend un poste de pré-contrôle (**19**) disposé en amont dudit poste de contrôle (**6**) et adapté pour effectuer une analyse dimensionnelle des couvercles, ledit poste de pré-contrôle (**19**) comprenant un pont (**20**) placé sur ledit surface de support et de déplacement (**2**) pour définir avec elle une section de passage dont les dimensions correspondent sensiblement à celles des couvercles (**C**) pour faire passer librement les couvercles réguliers et bloquer les couvercles renversés ou déformés en évitant que ces derniers ne viennent dans ledit poste de commande (**6**).

2. Dispositif selon la revendication 1, **caractérisé en ce que** ledit poste de pré-contrôle (**19**) est adapté pour orienter les couvercles (**C**) selon une direction prédéterminée et maintenir ladite orientation lors du passage dudit pont (**20**) vers ledit tunnel (**11**).

3. Dispositif selon l'une quelconque des revendications précédentes, **caractérisé en ce que** ledit émetteur IR (**9**) est adapté pour générer un faisceau de rayonnement IR ayant une longueur d'onde comprise entre 800 nm et 900 nm.

4. Dispositif selon la revendication 3, **caractérisé en ce que** ledit poste de commande (**6**) comprend une plaque de blindage (**12**) comportant une fente longitudinale définissant ledit tunnel (**11**) pour le passage des couvercles (**C**).

5. Dispositif selon la revendication 4, **caractérisé en ce que** ladite plaque de blindage (**12**) comprend un conduit d'irradiation (**13**) transversal audit tunnel (**11**) et coaxial avec ledit émetteur IR (**9**) et avec ledit récepteur IR (**11**), ledit conduit d'irradiation (**13**) ayant des ouvertures axiales (**14, 15**) mutuellement opposées et faisant face respectivement audit émetteur IR (**9**) et audit récepteur IR (**10**) pour le passage du faisceau de rayonnement IR dans ledit tunnel (**11**).

6. Dispositif selon la revendication 5, **caractérisé en ce que** ledit conduit d'irradiation (**13**) a un diamètre correspondant sensiblement au diamètre des couvercles (**C**) à contrôler.

7. Dispositif selon l'une quelconque des revendications précédentes, **caractérisé en ce que** ledit dispositif infrarouge (**8**) est adapté pour effectuer un test de contrôle en envoyant ledit faisceau de rayonnement IR ayant une durée inférieure à 5 ms et de préférence proche de 2 ms.

8. Dispositif selon l'une quelconque des revendications précédentes, **caractérisé en ce que** ledit poste de pré-commande (**19**) comprend une photocellule (**22**) adaptée pour générer une impulsion de durée proportionnelle au temps de transit du couvercle (**C**) dans ledit pont (**20**), ladite photocellule (**22**) étant connectée fonctionnellement à une unité de microcontrôleur adaptée pour générer une commande d'arrêt immédiat si ledit temps de transit est supérieur à une valeur prédéterminée.

9. Dispositif selon l'une quelconque des revendications précédentes, **caractérisé en ce que** lesdits moyens d'alimentation (**3**) comprennent, dans ledit poste de commande (**6**), une paire de courroies d'entraînement (**24**) tournant en synchronisme et réalisées en un matériau polymère anti-usure revêtement en gomme.
